# FASCICULE DE BREVET EUROPEEN

(11) **EP 1 700 749 B1**
(45) Date de publication et mention de la délivrance du brevet: **31.03.2021**
(21) Numéro de dépôt: 06356024.7
(22) Date de dépôt: 10.03.2006
(51) Int. Cl.: B60R 19/02

(54) **Butoir d'accostage**
Andockpuffer
Docking buffer

(30) Priorité: 10.03.2005 FR 0502387
(43) Date de publication de la demande: 13.09.2006
(73) Titulaire: Lamberet, 01380 Saint Cyr sur Menthon (FR)
(72) Inventeur: Clavier, Francois, 71870 Hurigny (FR)
(74) Mandataire: Delorme, Nicolas

(56) Documents cités:
- WO-A-2004/098956
- DE-A1- 10 003 744
- FR-A1- 2 767 508
- US-A1- 3 146 013

## Description

La présente invention concerne un butoir d'accostage d'un véhicule motorisé ou traîné contre un quai.

Le transport de marchandises, lorsqu'il se fait par la route, implique de charger et décharger ces marchandises dans un véhicule tel qu'un camion, une remorque ou une semi remorque.

Le chargement et le déchargement peuvent se faire en faisant accoster la partie arrière du véhicule contre un quai ; ceci permet de mettre le plancher de chargement du véhicule sensiblement à la hauteur de l'espace logistique de chargement ou de déchargement.

L'accostage entre le véhicule et le quai peut être amorti par des butoirs élastiques qui ont une action d'amortissement multiple.

D'une part, ces butoirs devraient avoir une action d'amortissement dans une direction longitudinale du véhicule pour amortir le contact lors de l'accostage du véhicule contre le quai.

D'autre part, ces butoirs devraient avoir une action d'amortissement dans une direction verticale du véhicule car, lors de son chargement et déchargement, le débattement des suspensions et l'écrasement des pneumatiques du véhicule changent, ce qui a pour effet de modifier la hauteur du véhicule par rapport au quai. En outre, beaucoup de véhicules sont équipés d'une suspension pneumatique qui permet de régler leur débattement ; on utilise couramment la faculté de ces suspensions de pouvoir être réglées selon une direction verticale pour ajuster la hauteur du plancher du véhicule à celle du quai.

De plus, ces butoirs devraient également avoir une action d'amortissement transversale car il peut arriver que le véhicule se présente contre le quai, selon une direction non perpendiculaire à celle-ci.

On voit ainsi qu'un butoir d'accostage doit pouvoir encaisser des efforts de compression - amortissement dans le sens longitudinal - et de cisaillement - amortissement dans le sens transversal et vertical.

Or, on constate que les butoirs existant, compte tenu des sollicitations auxquelles ils sont soumis, se détériorent rapidement et ne sont plus en mesure de remplir leur fonction.

Le document WO2004098956 divulgue un amortisseur destiné à amortir les chocs causés lors qu'un véhicule à moteur transport, un poids lourd ou autre véhicule de ce type s'approche de la paroi verticale d'une plateforme de changement, ou à amortir les changements de distance entre le véhicule entre le véhicule et la paroi de la plateforme lors du changement ou déchangement.

Un but de l'invention est donc de proposer un butoir d'accostage assurant un amortisseur longitudinal, vertical ou transversal tout en présentant une longévité importante.

L'invention a essentiellement pour objet un butoir d'accostage selon la revendication indépendante 1 pouvant être fixé sur un véhicule, qui comprend :
- un élément élastique constitué par un parallélépipède de matière élastomérique présentant des moyens de fixation sur le véhicule,
- une coque fixée sur l'élément élastique assurant une protection de ce dernier ; l'élément élastique recevant une plaque postérieure de fixation au véhicule, la plaque postérieure comprenant une ouverture circulaire, et une plaque antérieure de fixation de la coque, l'élément élastique présentant un évidement agencé dans la partie centrale de l'élément élastique dans le prolongement de l'ouverture de la plaque postérieure, dans lequel est engagée une broche liée à la coque par une fixation à la plaque antérieure, pour limiter une amplitude de déformation de l'élément élastique, la broche étant configurée pour venir en appui contre la plaque postérieure et au moins un puits.

Le fondement de l'invention est de prévoir une limitation de l'amplitude des mouvements subis par l'élément élastique dans des directions transversale et verticale par rapport au véhicule. On précise que les termes transversal, longitudinal, vertical sont donnés par rapport à un référentiel véhicule. En effet, les sollicitations du butoir dans les directions transversale et verticale se traduisent par un cisaillement de l'élément élastique qui est extrêmement préjudiciable à ce dernier ; l'invention prévoit donc de limiter l'amplitude des déformations subies par l'élément élastique.

Selon l'invention, l'élément élastique présente un évidement dans lequel est engagée une broche liée à la coque. Cette broche permet de réaliser la limitation d'amplitude puisque son déplacement est limité par l'espace qui défini par l'évidement.

De façon préférée, la coque est constituée d'un matériau présentant un faible coefficient de frottement. Ce matériau peut être un matériau métallique tel qu'un acier inox; l'utilisation d'un tel matériau permet, lors d'un mouvement vertical ou transversal du véhicule par rapport à une surface d'accostage, que butoir glisse le long de la surface d'accostage avant de solliciter l'élément élastique en cisaillement.

Il est également envisagé que la coque est constituée d'un élément parallélépipédique dont les bords sont pliés pour former des ailes qui enveloppent l'élément élastique. Outre, le fait de protéger l'élément élastique, la coque, dont les bords sont pliés, ne présente aucune aspérité ce qui constitue là encore une disposition qui favorise le glissement.

Pour réaliser l'interface entre l'élément élastique et, d'une part, un véhicule et, d'autre part, la coque de protection, l'élément élastique reçoit une plaque postérieure de fixation au véhicule et une plaque antérieure de fixation de la coque.

De façon préférée, la plaque postérieure présente une ouverture dont les dimensions correspondent à celles de l'évidement de l'élément élastique. Cette disposition permet de ménager une course longitudinale à la broche et fait que en cas de sollicitation transversale ou verticale du butoir, le broche peut venir en butée contre l'ouverture de plaque postérieure.

On note que l'élément élastique présente au moins un puit ; ce puit permet d'augmenter la souplesse de l'élément élastique.

Selon une possibilité de réalisation, la broche est soudée à la plaque antérieure.

Pour assurer la retenue du butoir, il peut être envisager que la plaque postérieure présente deux perçages en face de chacun desquels est positionné un écrou borgne.

De préférence, la plaque antérieure présente une ouverture située en face de chaque puit.

Pour la fixation de la coque sur l'élément élastique, la coque est équipée de goujons pouvant venir s'engager dans chacun des perçages pratiqués dans la plaque antérieure.

Pour sa bonne compréhension, l'invention est décrite en référence au dessin ci annexé représentant, à titre d'exemple non limitatif, une forme de réalisation d'un butoir d'accostage selon l'invention.
Figures 1 et 2 représentent en perspective le butoir selon l'invention respectivement selon une direction d'observation arrière et une direction d'observation avant,
Figure 3 montre une partie interne du butoir,
Figure 4 est une vue en coupe selon III-III de figure 3,
Figures 5 et 6 représentent en perspective une partie externe du butoir,
Figure 8 montrent le butoir respectivement au repos et en charge lorsqu'il subit une déformation selon une direction verticale.

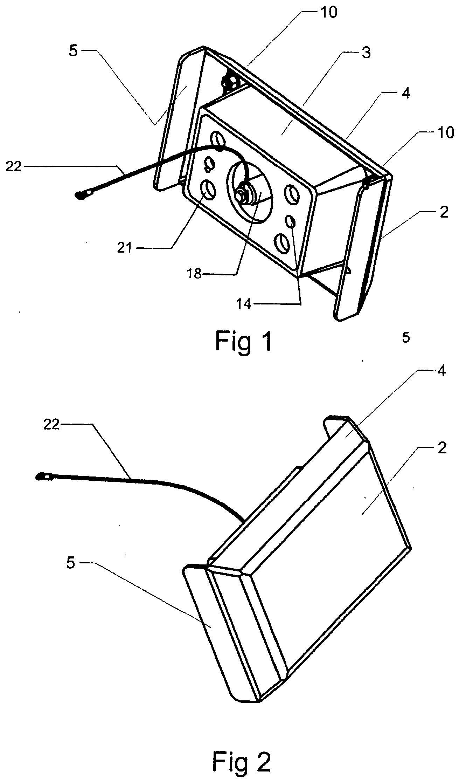

Pour la description de ce butoir, on se référera tout d'abord à la figure 1 et à la figure 2 du dessin.

On peut voir sur cette figure que le butoir comprend une coque 2 qui est fixée sur un élément élastique 3. La coque 2, dans l'exemple de réalisation montré sur le dessin, est constituée d'une tôle sensiblement rectangulaire dont les bords longitudinaux et transversaux ont été pliés pour former des ailes longitudinales 4 et des ailes transversales 5 qui viennent envelopper au moins partiellement l'élément élastique 3.

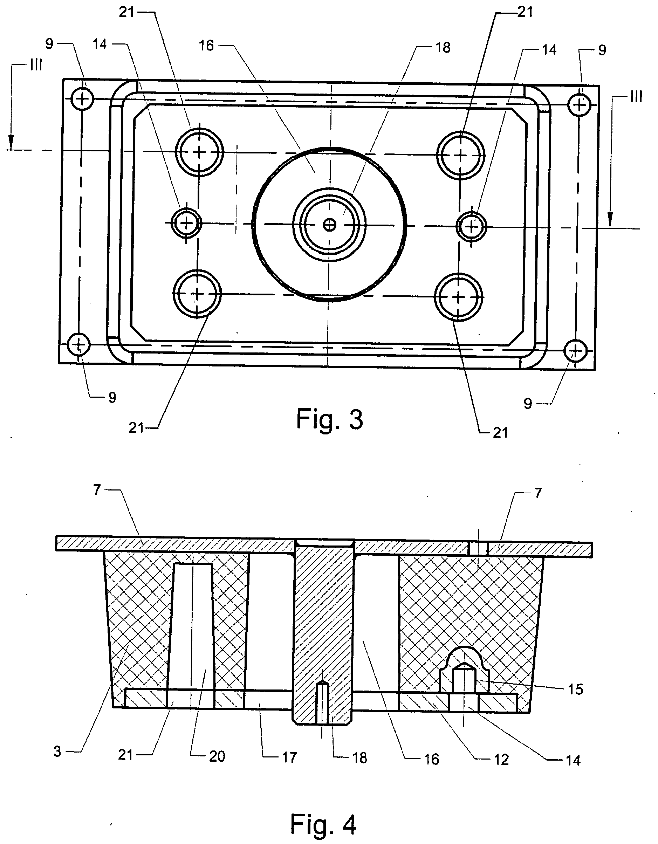

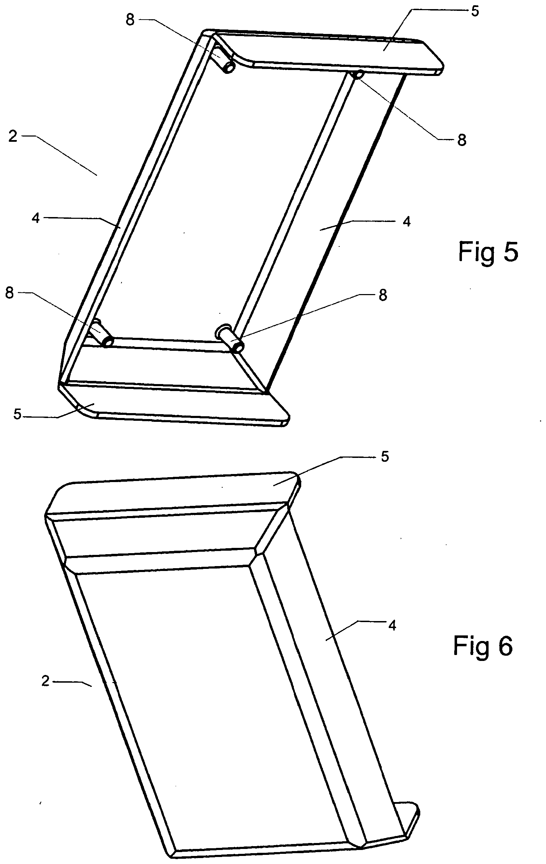

L'élément élastique 3 est constitué, quant à lui, par un parallélépipède de matière élastomérique. On peut se reporter plus particulièrement aux figures 3 et 4 pour la description de cet élément L'interface entre la coque 2 et l'élément élastique 3 est constituée par une plaque antérieure 7 sensiblement rectangulaire. Cette plaque antérieure 7 est, d'une part, adhérisée à l'élément élastique 3 - cette adhérisation est obtenue au cours d'une opération de surmoulage de l'élément élastique 3 sur la plaque antérieure 7 - et, d'autre part, est fixée à la coque 2 par des moyens mécaniques. Il peut, notamment, s'agir de quatre goujons 8 solidaires de la coque 2 - ces goujons 8 sont clairement visibles à la figure 5 - qui sont engagés dans quatre ouvertures 9 pratiquées dans la plaque antérieure 7. La fixation est parachevée par quatre écrous 10. On voit que pour assurer sa fixation avec la coque 2, la plaque antérieure 7 présente une longueur qui excède celle de l'élément élastique 3.

L'interface entre l'élément élastique 3 et un véhicule sur lequel le butoir pourra être monté, est réalisée par une plaque postérieure 12. Cette plaque postérieure 12 est rendue solidaire de l'élément élastique 3 par une adhérisation obtenue par un surmoulage de l'élément élastique 3 sur la plaque postérieure 12. En pratique, l'élément élastique 3 est surmoulé simultanément avec les plaques antérieure 7 et postérieure 12.

En se référant à la vue en coupe de la figure 3, on constate que la plaque postérieure 12 est pourvue de deux perçages 14 en face desquels sont soudés deux écrous 15 borgnes. Ces écrous borgnes 15 serviront à la réception de vis ou de goujons qui permettront de fixer le butoir sur un véhicule. Il est à remarquer que, sur le dessin, ce véhicule n'est pas représenté.

Selon l'invention, il est prévu un évidement 16 dans l'élément élastique 3. Cet évidement 16 est réalisé dans la partie centrale de l'élément élastique 3. Cet évidement 1 présente une forme circulaire.

L'évidement 16 trouve son prolongement dans une ouverture 17 également circulaire et de même dimension qui est ménagée dans la plaque postérieure 12.

Comme on peut le voir, l'élément élastique 3 présente donc une zone vide en son centre. Cet évidement reçoit une broche 18 qui est fixée, dans l'exemple représenté par soudage à la plaque antérieure 7.

On note que cette broche 18 est une pièce métallique massive dont le diamètre peut être de l'ordre de vingt à trente millimètres.

En ce qui concerne l'élément élastique 3, il présente de puits 20. Dans le butoir représenté, ces puits 20 sont au nombre de quatre et sont mis en concordance avec quatre perçages 21 réalisés dans la plaque postérieure.

La fixation du butoir peut donc se faire par des vis ou goujons qui sont vissés dans les écrous borgnes 15.

On peut préciser que la mise en place du butoir peut être facilitée en utilisant l'un des puits dans lequel un doigt peut être introduit le temps du montage, pour supporter le butoir. Le butoir, tel qu'il est défini, est en effet une pièce relativement lourde puisque son poids peut être compris entre cinq et quinze kilogrammes selon ses dimensions.

On note que la broche 18 reçoit à son extrémité libre un cordon 22 qui peut être fixé au véhicule.

En fonctionnement, le comportement du butoir selon l'invention apparaît être le suivant.

Dans le cas d'un accostage entre un véhicule équipé du butoir selon l'invention et un quai, le butoir peut s'écraser dans le sens longitudinal puisque l'élément élastique 3, qui est constitué d'élastomère, se compresse lors d'un choc entre la coque 2 et un quai.

Dans le cas d'un déplacement du véhicule dans le sens vertical typiquement lors du chargement et déchargement de marchandises du véhicule, le butoir est donc sollicité en cisaillement. En effet, la coque 2 et les éléments qui lui sont rigidement attachés, c'est-à-dire la plaque antérieure 7 et la broche 18 sont en appui contre un quai fixe, tandis que la plaque postérieure 12 qui est rigidement reliée au véhicule est animée d'un déplacement selon une composante verticale.

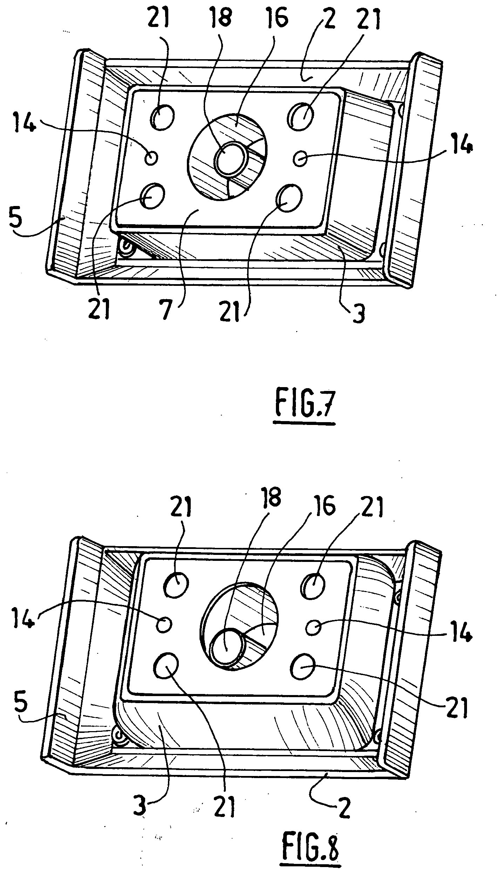

L'élément élastique 3 se déforme donc selon une composante verticale, mais la grande spécificité du butoir selon l'invention est que l'amplitude de déformation de l'élément élastique 3 est limitée. Cette limitation est obtenue par la broche 18 qui vient en appui contre la plaque postérieure 12. La figure 8 illustre clairement ce point.

Ainsi, il est possible de maîtriser le cisaillement que subit l'élément élastique 3.

Or, les contraintes de cisaillement sont celles qui sont les plus néfastes pour l'élastomère qui constitue l'élément élastique 3. Ce contrôle et cette limitation de la déformation que subit l'élément élastique 3 contribue, de manière très significative à sa longévité.

Il doit être noté que le butoir se comporte de la même manière dans le cas où il est sollicité selon une composante transversale. Ce cas de figure se rencontre dans le cas où le véhicule accoste sur un quai selon une direction qui n'est pas totalement perpendiculaire au plan du quai.

On peut également préciser que le glissement de la coque 2 sur une surface d'accostage est grandement facilité par la forme même de cette dernière ; la coque 2 ne présente en effet aucune aspérité qui pourrait entraver son glissement. Par ailleurs, la coque 2 est réalisée, de préférence en acier inox, qui offre un faible coefficient de frottement et donc facilite le glissement contre la surface d'accostage. Un effet important découlant de la structure de la coque 2 - absence d'aspérités et matériau à faible coefficient de frottement - est que le butoir peut glisser contre sa surface d'accostage avant de solliciter l'élément élastique en cisaillement.

Un avantage supplémentaire à mettre au crédit du butoir selon l'invention est que la coque 2 qui constitue l'organe de contact avec la surface d'accostage et donc peut être détériorée par les chocs qu'elle encaisse peut être remplacée de manière simple tout en conservant les autres éléments de butoirs.

Bien entendu, l'invention n'est pas limitée à la forme de réalisation décrite ci-dessus, mais elle en embrasse au contraire toutes les formes de réalisation.

Ainsi, si dans l'exemple de réalisation, il est prévu une broche qui est engagée dans un évidement pratiqué dans l'élément élastique 3, il est tout à fait envisageable de prévoir une broche ou un autre élément de contrôle d'amplitude qui serait positionné à l'extérieur de l'élément élastique 3. On peut également envisager d'autres moyens de fixation de l'élément élastique sur la coque et sur le véhicule.

## Revendications

1. Butoir d'accostage pouvant être fixé sur un véhicule, il comprend :
- un élément élastique (3) constitué par un parallélépipède de matière élastomérique présentant des moyens de fixation sur le véhicule,
- une coque (2) fixée sur l'élément élastique (3) assurant une protection de ce dernier, l'élément élastique (3) recevant une plaque postérieure (12) de fixation au véhicule, la plaque postérieure (12) comprenant une ouverture circulaire (17), et une plaque antérieure (7) de fixation de la coque (2), **caractérisé en ce que** l'élément élastique (3) présente un évidement (16) agencé dans la partie centrale de l'élément élastique (3) dans le prolongement de l'ouverture (17) de la plaque postérieure (12), dans lequel est engagée une broche (18) liée à la coque (2) par une fixation à la plaque antérieure (7), pour limiter une amplitude de déformation de l'élément élastique (3), la broche (18) étant configurée pour venir en appui contre la plaque postérieure (12) et au moins un puits (20).

2. Butoir d'accostage selon la revendication 1, **caractérisé en ce que** la coque (2) est constituée d'un matériau présentant un faible coefficient de frottement.

3. Butoir d'accostage selon l'un des revendications 1 à 2, **caractérisé en ce que** la coque (2) est constituée d'un élément parallélépipédique dont les bords sont pliés pour former des ailes (4,5) qui enveloppent l'élément élastique (3).

4. Butoir d'accostage selon l'une des revendications 1 à 3, **caractérisé en ce que** la plaque postérieure (12) présente l'ouverture circulaire (17) (17) dont les dimensions correspondent à celles de l'évidement (16) de l'élément élastique (3).

5. Butoir d'accostage selon l'une des revendications 1 à 4, **caractérisé en ce que** la broche (18) est soudée à la plaque antérieure (7).

6. Butoir d'accostage selon l'une des revendications là 5, **caractérisé en ce que** la plaque antérieure (7) présente deux perçages (14) en face de chacun desquels est positionné un écrou borgne (15).

7. Butoir d'accostage lune des revendications 1 à 6, **caractérisé en ce que** la plaque antérieure (7) présente une ouverture (21) située en face de chaque puits (20).

8. Butoir d'accostage selon l'une des revendications 1 à 7, **caractérisé en ce que** la coque (2) est équipée de goujons (8) pouvant venir s'engager dans des perçages pratiqués dans la plaque antérieure (7).

## Patentansprüche

1. Andockpuffer, der auf einem Fahrzeug befestigt werden kann, umfassend:
- ein elastisches Element (3), das von einem Parallelepiped aus Elastomermaterial gebildet wird, das Mittel zur Befestigung auf dem Fahrzeug aufweist,
- eine Schale (2), die auf dem elastischen Element (3) befestigt ist und einen Schutz dieses Letzteren sicherstellt, wobei das elastische Element (3) eine hintere Platte (12) zur Befestigung am Fahrzeug aufnimmt, wobei die hintere Platte (12) eine kreisrunde Öffnung (17) umfasst, und eine vordere Platte (7) zur Befestigung der Schale (2), **dadurch gekennzeichnet, dass** das elastische Element (3) eine Aussparung (16) aufweist, die in dem mittleren Teil des elastischen Elements (3) in der Verlängerung der Öffnung (17) der hinteren Platte (12) angeordnet ist, in welche ein Stift (18) eingeführt ist, der mit der Schale (2) durch eine Befestigung an der vorderen Platte (7) verbunden ist, um ein Ausmaß der Verformung des elastischen Elements (3) zu begrenzen, wobei der Stift (18) ausgestaltet ist, gegen die hintere Platte (12) und mindestens einen Schacht (20) zu drücken.

2. Andockpuffer nach Anspruch 1, **dadurch gekennzeichnet, dass** die Schale (2) aus einem Material gebildet ist, das einen geringen Reibungskoeffizienten aufweist.

3. Andockpuffer nach einem der Ansprüche 1 bis 2, **dadurch gekennzeichnet, dass** die Schale (2) von einem Parallelepipedelement gebildet wird, dessen Ränder umgebogen sind, um Flügel (4, 5) zu bilden, die das elastische Element (3) umhüllen.

4. Andockpuffer nach einem der Ansprüche 1 bis 3, **dadurch gekennzeichnet, dass** die hintere Platte (12) eine kreisrunde Öffnung (17) aufweist, deren Abmessungen jenen der Aussparung (16) des elastischen Elements (3) entsprechen.

5. Andockpuffer nach einem der Ansprüche 1 bis 4, **dadurch gekennzeichnet, dass** der Stift (18) an der vorderen Platte (7) verschweißt ist.

6. Andockpuffer nach einem der Ansprüche 1 bis 5, **dadurch gekennzeichnet, dass** die vordere Platte (7) zwei Bohrungen (14) aufweist, welchen jeweils gegenüber eine Hutmutter (15) positioniert ist.

7. Andockpuffer nach einem der Ansprüche 1 bis 6, **dadurch gekennzeichnet, dass** die vordere Platte (7) eine Öffnung (21) aufweist, die sich gegenüber jedem Schacht (20) befindet.

8. Andockpuffer nach einem der Ansprüche 1 bis 7, **dadurch gekennzeichnet, dass** die Schale (2) mit Bolzen (8) ausgestattet ist, die in Bohrungen eingreifen können, die in der vorderen Platte (7) ausgeführt sind.

## Claims

1. A docking bumper which can be fastened on a vehicle, it comprises:
an elastic element (3) consisting of an elastomeric material parallelepiped having means for fastening on the vehicle,
- a shell (2) fastened on the elastic element (3) ensuring a protection of the latter, the elastic element (3) receiving a posterior plate (12) for fastening to the vehicle, the posterior plate (12) comprising a circular opening (17), and an anterior plate (7) for fastening the shell (2), **characterized in that** the elastic element (3) has a recess (16) arranged in the central portion of the elastic element (3) in the extension of the opening (17) of the posterior plate (12), in which a pin (18), which is linked to the shell (2) by a fastening to the anterior plate (7), is engaged to limit an amplitude of deformation of the elastic element (3), the pin (18) being configured to bear against the posterior plate (12) and at least one well (20).

2. The docking bumper according to claim 1, **characterized in that** the shell (2) consists of a material having a low coefficient of friction.

3. The docking bumper according to any of claims 1 to 2, **characterized in that** the shell (2) consists of a parallelepiped element whose edges are bent to form wings (4, 5) which envelop the elastic element (3).

4. The docking bumper according to any of claims 1 to 3, **characterized in that** the posterior plate (12) has the circular opening (17) whose dimensions correspond to those of the recess (16) of the elastic element (3).

5. The docking bumper according to any of claims 1 to 4, **characterized in that** the pin (18) is welded to the anterior plate (7).

6. The docking bumper according to any of claims 1 to 5, **characterized in that** the anterior plate (7) has two bores (14), in front of each of which a cap nut (15) is positioned.

7. The docking bumper according to any claims 1 to 6, **characterized in that** the anterior plate (7) has an opening (21) located in front of each well (20).

8. The docking bumper according to any of claims 1 to 7, **characterized in that** the shell (2) is equipped with studs (8) which can be engaged in bores formed in the anterior plate (7).
